Europäisches Patentamt

European Patent Office

Office européen des brevets

(11) Publication number: **0 456 437 B1**

# EUROPEAN PATENT SPECIFICATION

(45) Date of publication of patent specification: **12.10.94**  (51) Int. Cl.5: **B60C 17/00**, B60C 13/00

(21) Application number: **91304064.8**

(22) Date of filing: **03.05.91**

(54) Safety tyre.

(30) Priority: **07.05.90 JP 117935/90**

(43) Date of publication of application:
**13.11.91 Bulletin 91/46**

(45) Publication of the grant of the patent:
**12.10.94 Bulletin 94/41**

(84) Designated Contracting States:
**DE FR GB**

(56) References cited:
EP-A- 0 371 755        DE-A- 2 331 530
DE-A- 2 449 668        GB-A- 2 033 316
US-A- 4 365 659        US-A- 4 779 658

(73) Proprietor: **SUMITOMO RUBBER INDUSTRIES
LIMITED
1-1 Tsutsuicho 1-chome
Chuo-ku
Kobe-shi Hyogo-ken (JP)**

(72) Inventor: **Ataka, Hiroshi
8-14 Aoyama 2-chome,
Shijimicho
Miki-shi, Hyogo-ken (JP)**

(74) Representative: **Stewart, Charles Geoffrey
SP TYRES UK LIMITED
Tyre Technical Division
Fort Dunlop, Erdington, Birmingham B24 9OT
(GB)**

**Description**

The present invention relates to a pneumatic tyre and more particularly a safety tyre.

A run flat tyre is required to have the ability to run continuously for a relatively long distance at a high speed in a deflated or punctured condition. For example, to provide for safety running on expressways, a run flat tyre is required to have the ability to run for a distance of more than 50 km at a speed of about 80 km/hr.

Hitherto, a system in which a load supporting elastic member is disposed inside a tyre, and a system in which an inflated tube member like a small size tyre is separately disposed inside a tyre to form a double-chamber structure, have been proposed. Such systems, however, have not been successful because of the increased weight and the resultant decrease in dynamic characteristics and the complex assembly and maintenance.

It has also been proposed to increase the sidewall thickness and thereby to support the tyre load under deflated conditions, by using a reinforcing rubber layer disposed axially inside the carcass in each of the sidewalls. However, when the sidewall thickness is simply increased, the tyre weight is also increased, and radiation of hysteresis loss generated heat is hindered which results in excessive heating of the tyre structure leading to structural failure. Also ride comfort is impaired. On the other hand, to avoid such a thickness increase, if the elastic modulus of the rubber to a compressive stress is increased, its durability for the reapeated bending deformation is lost, and heat generation increases still further.

A known tyre showing the features of the preamble of claim 1 is shown, e.g. in US-A-4 779 658.

It is therefore, an object of the present invention to provide a safety tyre of which run flat performance is provided without the above problems. According to one aspect of the present invention, a safety tyre comprises a tread portion, a pair of axially spaced bead portions each provided with a bead core, a pair of sidewalls extending between the tread edges and the bead portions, a carcass extending between the bead portions and turned up around the bead cores to be secured thereto, belt reinforcements including at least two plies of cords disposed radially outside the carcass and inside the tread, an inner sidewall disposed on an axially inner curved face of the carcass in each sidewall portion, characterised in that the inner sidewall tapered is at its radially outer and inner edges to have a crescent cross-sectional shape, the radius of the curvature of the axially inner face of the carcass in each sidewall being in the range of 0.3 to 0.5 times the section height (H) of the tyre, the total thickness of each sidewall portion satisfying the following conditions:

$$0.18 \leq x/H \leq 0.34$$
$$y < x$$
$$300 \leq (x+y)^{x/y} \leq 450$$

where
x = the total thickness (mm) measured along a straight line drawn normal to the carcass from the axially outer edge of the radially innermost belt ply,
y = the total thickness (mm) measured at the maximum section width point at which the cross section width of the tyre is maximum, and
H = the section height of the tyre,
said inner sidewall comprising rubber consisting of 100 parts by weight of a rubber compound, 40 to 60 parts by weight of carbon black whose particle diameter is 70 to 50 nano-meters, and 3 to 8 parts by weight sulfur, wherein said rubber compound comprises 50 to 80 parts by weight of polybutadiene which includes 1,2-polybutadiene at not less than 75% by weight and whose crystallisation is not more than 15%, and 20 to 50 parts by weight of at least one kind of rubber selected from polyisoprene rubber, styrene-butadiene rubber, cis-1,4-polybutadiene rubber and halogenated butyl rubber.

An embodiment of the present invention will now be described in detail by way of example only, with reference to the accompanying drawings, in which:

Fig.1 is a sectional view showing a tyre;

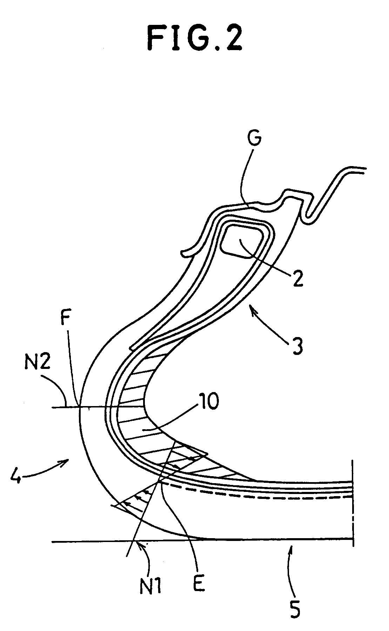

Fig.2 is a sectional view showing the tyre in a deflated loaded state.

In the figures, a safety tyre 1 has a pair of axially spaced bead portions 3 each having a bead core 2, a tread portion 5, and a pair of sidewalls 4 extending radially outwardly from the bead portions 3 to the tread edges.

The tyre 1 had a radial tyre structure 11 comprising a toroidal carcass 6 extending between the bead portions 3 and turned up around the bead cores 2 to be secured thereto, and belt reinforcements disposed radially outside the carcass.

The carcass 6 is composed of two plies 6A and 6B of cords arranged radially at 60 to 90 degrees to the tyre equator, and the edges of each ply are turned up around the bead cores from the inside to the outside of the tyre to form two turned up portions and one main portion therebetween.

For the carcass cords, steel cords and organic fibre cords, e.g. rayon, polyester, nylon, aramid or the like can be used.

For each sidewall 4, the radius R of curvature of the inner face of the carcass is 0.30 to 0.50 times the section height H of the tyre. In this example the radius is in the range of 33 mm to 50 mm. When the radius is less than 0.30 H, the bending rigidity of the sidewall portion decreases, and when the radius is more than 0.50 H, the bending rigidity increases.

The belt reinforcement comprises a breaker 7 and a band 8.

The breaker 7 is composed of two plies 7A and 7B each of parallel cords inclined with respect to the tyre equator so that the cords in each ply cross the cords in the next ply.

The radially inner ply 7A is wider than the outer ply 7B.

For the breaker cords, stell cords or high modulus organic fibre cords such as aromatic polyamide cords are preferably used. These may be used with low modulus organic fibre cords, e.g. nylon, polyester, rayon or the like.

However, the breaker may be formed only by such low modulus organic fibre cords to allow the breaker a certain deformation or elongation according to carcass deformation.

The band 8 is disposed radially outside the breaker 7 and extends from one edge to the other edge of the breaker to cover its whole width.

The band 8 is composed of two plies 8A and 8B of parallel cords laid at a small or zero angle to the circumferential direction, and the edges of each ply are aligned with the edges of the breaker.

For the band cords, organic fibre cords, e.g. rayon, nylon, polyester or the like are used to mitigate the shear stress between the relatively rigid breaker and the tread rubber and thereby to prevent separation of the breaker edges film the rubber.

Further, a breaker cushion 9 made of soft rubber is disposed between each edge of the breaker 17 and the carcass 6, and in each bead portion there is a bead apex made of hard rubber extending radially outwardly and taperingly from the bead core 2 between each carcass turned up portion and the main portion.

The tread 5 is made of rubber and disposed radially outside the belt reinforcements 7A,7B to reinforce the tread portion 5.

The outer sidewalls comprise rubber and are disposed on the axially outer sides of the carcass 6. Also inner sidewalls 10 are provided made of rubber and disposed on the axially inner sides of the carcass 6.

The radially outer edge D1 and inner edge D2 of each inner sidewall 10 are tapered so that the inner sidewall has a crescent cross-sectional shape.

The radially outward tapered portion 10B extends somewhat into the tread portion from the main portion 10A, and the inward tapered portion 10C extends to the bead portion. The radial height B of the radially inner edge D2 from the bead base line L is 0.1 to 0.3 times the tyre section height H from the bead base line L, and the radial height A of the radially outer edge D1 thereof from the bead base line is 0.7 to 0.8 times the tyre section height H.

Preferably, the radius RB of curvature of the inner surface of the inner sidewall 10 is more than the above-mentioned radius R of the carcass and not more than 0.50 times the tyre section height H, in this example not more than 50 mm.

In the present invention, the total thickness of the sidewall portion is as follows.

The ratio x/H of a thickness x to the tyre section height H is not less than 0.18 and not more than 0.34, where the thickness x is measured along a straight line N1 drawn normal to the carcass from the axially outer edge E of the innermost breaker ply 7A adjacent to the carcass 6. Based on the thickness x (mm), a thickness y (mm) at the maximum width point F satisfies the following equations 1) and 2)

$$y < x \qquad 1)$$

$$300 \leq (x + y)^{x/y} \leq 450 \qquad 2)$$

The above-mentioned maximum width point F is a point on the outside of the tyre sidewall portion at which the cross section width of the tyre becomes maximum.

Hereinafter, $(x + y)^{x/y}$ will be referred as the thickness distribution index.

If the thickness distribution index is less than 300, the sidewall is liable to be folded near the belt edge E. On the other hand, if the index is more than 450, the sidewall is liable to be folded near the tyre maximum width point F. In either case, the sidewall can not support the tyre load.

In this embodiment, the tyre 1 is provided with a bead retaining system to prevent bead dislocation from the wheel rim bead seats under a deflated condition.

In each bead portion, a relatively thick rubber member 19 is shaped axially inwards of the carcass to form a bead toe 14. The rubber member 19 extends radially outwardly to the radially inner edge of the inner sidewall 10 to overlap with the above-mentioned tapered portion 10C and axially outwardly to a position beneath the bead core to define the bead base which is tapered.

The bead toe 14 extends radially inwardly at the axially inner end of the bead base to be inserted into a groove 16 formed at the axially inner end of a tapered bead seat 13 of a wheel rim G.

Further, the bead base is provided with a groove 15 immediately axially outside the bead toe 14 and inside the bead core 2, which groove 15 fits to a hump 17 formed in the bead seat 13 of the rim G for which the tyre is designed.

Furthermore, in order to prevent the bead portion from being chafed by the rim, a chafer of organic fabric is disposed along the profile of the bead portion, to extend from the axially inside to the outside of the bead portion.

Incidentally, it is also possible to form a toe on only one of the tyre beads.

The above-mentioned inner sidewall rubber consists of 100 parts by weight of a rubber compound, 40 to 60 parts by weight of carbon black whose particle diameter is 70 to 50 nano-meters, and 3 to 8 parts by weight sulfur. Also, vulcanisation accelerator, age resistor, softener and the like are included.

The rubber compound consists of 50 to 80 parts by weight of polybutadiene which includes 1,2-polybutadiene at not less than 75 weight % and whose crystallisation is not more than 15%, and 20 to 50 parts by weight of at least one kind of rubber selected from polyisoprene rubber, styrene-butadiene rubber, cis-1,4-polybutadierie rubber or a halogenated butyl rubber.

Such polybutadiene including the 1,2-structure can be made by the methods described in, for example Japanese patent Publication (KOKOKU) Nos. 44-32425, 44-32426, 46-38700 and 47-1226.

If the 1,2-polybutadiene is less than 75%, the modulus of the inner sidewall 10 becomes insufficient to reinforce the sidewall portion.

If the crystallisation is more than 15%, the vulcanised rubber becomes excessively hard, and its processability becomes poor.

In the above-mentioned rubber compound, if the amount of the polybutadiene is less than 50 parts by weight, in other words the other ingredient is more than 50 parts by weight, the modulus of the compound when vulcanised becomes too poor.

If the polybutadiene is more than 80 parts by weight, the strength and elongation at bieakage of the vulcanised rubber compound becomes insufficient to adequately reinforce the sidewall portions of the safety tyre.

In the above-mentioned inner sidewall rubber, as explained above, 40 to 60 parts by weight of carbon black is mixed with 100 parts by weight of the rubber compound.

If the carbon black is less than 40 parts by weight, the reinforcing effect becomes too poor, but if it is more than 60 parts by weight, the elasticity decreases and processability is greatly lowered and the heat generation property becomes worse.

From a heat generation and reinforcing effect, it is preferable for the carbon black that the iodine number is not more than 80 ml/g, and the dibutyl phthalate oil absorption is not less than 90ml/100g.

Further, in the inner sidewall rubber, 3 to 8 parts, preferably 5 to 7 parts by weight of sulfur (as the sulfur itself and/or the sulfur in an organic vulcanising agent) is mixed with 100 parts by weight of the rubber compound.

If it is less than 3 parts by weight, the percentage of crystallisation of the vulcanised compound becomes excessively high, and the modulus thereof is decreased largely as the temperature increases.

If it exceeds 8 parts by weight, the strength decreases rapidly, and the impact strength becomes decreased.

For the above-mentioned organic vulcanising agent sulfur, 4,4′-dithiodimorpholine, alkylthiuramdisulfide, alkylphenoldisulfide or the like can be used.

Table 1 and Table 2 show test rubber compositions and their characteristics (strength, elongation at breakage, 100% modulus and heat generation).

The strength and elongation at breakage were measured according to the methods specified in JIS-K6301, and the heat generation was measured according to ASTM D623-67.

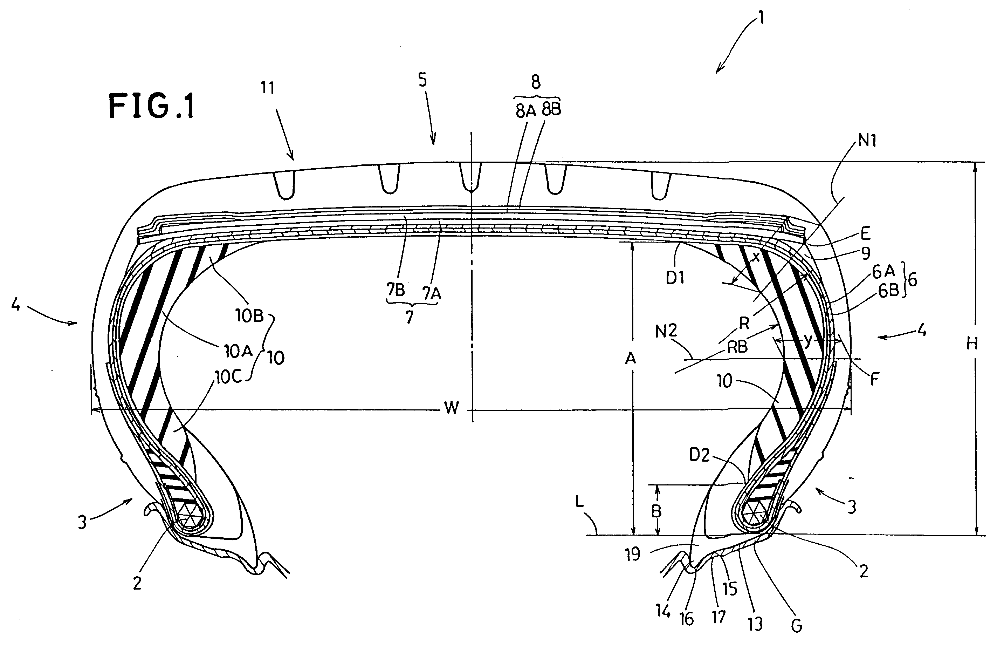

Table 3 shows the results of comparison tests. Test tyres of size 215/50R14.5 having the tyre construction shown in Fig.1 and specifications given in Table 3 were prepared and tested.

4

In the test, each test tyre was mounted on its regular rim of size LT5, and installed on one of the rear wheels of a delivery van whose maximum pay load was 1 ton. The tyre was run at a speed of 80 km/Hr under a zero pressure condition, and the running distance to breakage was measured.

As shown in Table 3, it was confirmed that the tyres according to the present invention had excellent run flat performance.

**TABLE 1**

| Rubber No. | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| **INGREDIENT (weight %)** | | | | | | | | | | | | | | | | |
| Compound No. in Table 2 | 1 | 2 | 3 | 4 | 5 | 6 | 7 | 8 | 3 | 3 | 3 | 3 | 3 | 3 | 3 | 3 |
| weight % | 80 | 70 | 60 | 50 | 75 | 75 | 45 | 85 | 60 | 60 | 60 | 60 | 80 | 50 | 80 | 50 |
| polyisoprene rubber | 20 | 30 | 40 | 50 | 25 | 25 | 55 | 15 | 40 | 40 | 40 | 40 | 20 | 50 | 20 | 50 |
| carbon black FEF * | 50 | 50 | 50 | 50 | 50 | 50 | 50 | 50 | 50 | 50 | 50 | 50 | 0 | 0 | 0 | 0 |
| GPF | 0 | 0 | 0 | 0 | 0 | 0 | 0 | 0 | 0 | 0 | 0 | 0 | 40 | 60 | 60 | 40 |
| stearic acid | 2 | 2 | 2 | 2 | 2 | 2 | 2 | 2 | 2 | 2 | 2 | 2 | 2 | 2 | 2 | 2 |
| zinc oxide | 5 | 5 | 5 | 5 | 5 | 5 | 5 | 5 | 5 | 5 | 5 | 5 | 5 | 5 | 5 | 5 |
| sulfur | 5 | 5 | 5 | 5 | 5 | 5 | 5 | 5 | 3 | 8 | 2 | 9 | 5 | 5 | 5 | 5 |
| vulcanization accelerator | 2 | 2 | 2 | 2 | 2 | 2 | 2 | 2 | 2 | 2 | 2 | 2 | 2 | 2 | 2 | 2 |
| age resistor | 1 | 1 | 1 | 1 | 1 | 1 | 1 | 1 | 1 | 1 | 1 | 1 | 1 | 1 | 1 | 1 |
| **TEST RESULTS** | | | | | | | | | | | | | | | | |
| Strength (kgf/sq.cm) | 146 | 152 | 167 | 172 | 110 | 112 | 105 | 103 | 162 | 101 | 112 | 98 | 120 | 168 | 162 | 170 |
| Elongation at breakage (%) | 224 | 202 | 250 | 241 | 240 | 242 | 250 | 258 | 252 | 248 | 236 | 250 | 240 | 205 | 241 | 244 |
| 100% modulus (kgf/sq.cm) | 86 | 81 | 94 | 98 | 55 | 52 | 48 | 42 | 57 | 89 | 56 | 48 | 82 | 92 | 90 | 92 |
| Heat generation | 9 | 8 | 7 | 7 | 12 | 12 | 15 | 17 | 8 | 7 | 12 | 16 | 7 | 8 | 6 | 7 |

*) particle diameter FEF: 52 millimicrons    GPF: 70 millimicrons

**TABLE 2**

| Compound No. | 1 | 2 | 3 | 4 | 5 | 6 | 7 | 8 |
|---|---|---|---|---|---|---|---|---|
| **INGREDIENT (weight %)** | | | | | | | | |
| 1,2-polybutadiene | 75 | 85 | 92 | 97 | 85 | 72 | 90 | 96 |
| cis-1,4-polybutadiene | 25 | 15 | 8 | 3 | 15 | 28 | 10 | 4 |
| **TACTICITY** | | | | | | | | |
| syndiotactic | 25 | 45 | 50 | 51 | 52 | 53 | 60 | 78 |
| isotactic | 35 | 10 | 5 | 3 | 0 | 0 | 0 | 0 |
| atactic | 40 | 45 | 45 | 46 | 48 | 47 | 40 | 22 |
| Crystallization (%) | 0 | 5 | 10 | 15 | 20 | 35 | 70 | 75 |

TABLE 3

| Tire | Ex.1 | Ex.2 | Ref.1 | Ref.2 | Ref.3 | Ref.4 | Ref.5 | Ref.6 | Ref.7 |
|---|---|---|---|---|---|---|---|---|---|
| Distribution index | 300 | 450 | 280 | 460 | 280 | 300 | 400 | 300 | 300 |
| x/H | 0.18 | 0.34 | 0.20 | 0.30 | 0.38 | 0.16 | 0.40 | 0.30 | 0.30 |
| B/H | 0.70 | 0.80 | 0.80 | 0.80 | 0.80 | 0.70 | 0.70 | 0.65 | 0.85 |
| A/H | 0.30 | 0.10 | 0.05 | 0.35 | 0.30 | 0.25 | 0.30 | 0.25 | 0.15 |
| R (mm) | 33 | 50 | 30 | 52 | 33 | 52 | 28 | 33 | 33 |
| RB (mm) | 50 | 50 | 45 | 50 | 50 | 45 | 50 | 40 | 33 |
| Run Flat Performance Running distance (km) | | | | | | | | | |
| @ maximum load | 100 | 115 | 40 | 54 | 88 | 80 | 44 | 85 | 84 |
| @ 70% load | *500 | *500 | 96 | 100 | 206 | 180 | 120 | 320 | 400 |

*) The tire was not broken.
In each tire, the rubber No.3 in Table 1 was used for the inner sidewalls.

## Claims

1. A safety tyre comprising a tread portion (5), a pair of axially spaced beas portions (3) each provided with a bead core (2), a pair of sidewalls (4) extending between the tread edges and the bead portions (3), a carcass (6) extending between the bead portions (3) and turned up around the bead cores (2) to be secured thereto, belt reinforcements (8) including at least two plies (8A,8B) of cords disposed radially outside the carcass (6) and inside the tread (5), an inner sidewall (10)disposed onan axially inner curved face of the carcass (6) in each sidewall portion, characterised in that the inner sidewall is tapered at its radially outer and inner edges (10B,10C) to have a crescent cross-sectional shape, the radius of the curvature (R) of the axially inner face of the carcass in each sidewall (4) being in the range of 0.3 to 0.5 times the section height (H) of the tyre, the total thickness (y) of each sidewass (4) portion satisfying the following conditions:

$$0.18 \leqq x/H \leqq 0.34$$
$$y < x$$
$$300 \leqq (x + y)^{x/y} \leqq 450$$

where

x = the total thickness (mm) measured along a straight line drawn normal to the carcass from the axially outer edge of the radially innermost belt ply,

y = the total thickness (mm) measured at the maximum section width point at which the cross section width of the tyre is maximum, and

H = the section height of the tyre,

said inner sidewall (10) comprising rubber consisting of 100 parts by weight of a rubber compound, 40 to 60 parts by weight of carbon black whose particle diameter is 70 to 50 nano-meters, and 3 to 8 parts by weight sulfur, wherein said rubber compound comprises 50 to 80 parts by weight of polybutadiene which includes 1,2-polybutadiene at not less than 75% by weight and whose crystallisation is not more than 15%, and 20 to 50 parts by weight of at least one kind of rubber selected form polyisoprene rubber, styrene-butadiene rubber, cis-1,4-polybutadiene rubber and halogenated butyl rubber.

2. A tyre according to claim 1 characterised in that the radius of curvature (R) of the axially inner face of the carcass in each sidewall (4) being in the range of 33 to 50mm.

3. A tyre according to claim 1, characterised in that the the radial height (A) of the radially outer edge (D1) of said inner sidewall (10) from the bead base (13) is 0.7 to 0.8 times the tyre section height (H), and the radial height (B) of the radially inner edge (D2) thereof from the bead base (13) is 0.1 to 0.3 times the tyre section height (H).

## Patentansprüche

1. Ein Sicherheitsreifen mit einem Laufflächenteil (5), einem Paar von axial beabstandeten Wulstteilen (3), wovon jeder mit einem Wulstkern (2) versehen ist, einem Paar von Seitenwänden (4), die sich zwischen den Laufflächenrändern und den Wulstteilen (3) erstrecken, einer Karkasse (6), die sich zwischen den Wulstteilen (3) erstreckt und um die Wulstkerne (2) geschlagen ist, um daran befestigt zu sein, Gürtelverstärkungen (8), die zumindest zwei Lagen (8A, 8B) von Korden, die radial außerhalb der Karkasse (6) und innerhalb der Lauffläche (5) angeordnet sind, umfassen, einer inneren Seitenwand (10), die auf einer axial inneren gekrümmten Seite der Karkasse (6) in jedem Seitenwandteil angeordnet ist, dadurch gekennzeichnet, daß die innere Seitenwand an ihren radial äußeren und inneren Rändern (10B, 10C) verjüngt ist, um eine sichelförmige Querschnittsgestalt aufzuweisen, wobei der Krümmungsradius (R) der axial inneren Seite der Karkasse in jeder Seitenwand (4) in dem Bereich von 0,3 bis 0,5 mal der Querschnitthöhe (H) des Reifens liegt, die Gesamtdicke (y) von jedem Seitenwand-(4)Teil den folgenden Bedingungen genügt:

$$0,18 \leqq x/H \leqq 0,34$$
$$y < x$$
$$300 \leqq (x + y)^{x/y} \leqq 450,$$

wobei:

x = die Gesamtdicke (mm) ist, die längs einer geraden Linie gemessen ist, die normal zu der Karkasse von dem axial äußeren Rand der radial innersten Gürtellage gezogen ist,

y = die Gesamtdicke (mm) ist, die an dem Maximumsquerschnittsbreitenpunkt gemessen ist, bei welchem die Querschnittsbreite des Reifens maximal ist, und

H = die Querschnittshöhe des Reifens ist,
wobei die innere Seitenwand (10) Gummi umfaßt, das aus 100 Gewichtsteilen einer Gummiverbindung, 40 bis 60 Gewichtsteilen an Ruß, dessen Teilchendurchmesser 70 bis 50 Nanometer beträgt, und 3 bis 8 Gewichtsteilen Schwefel besteht, worin die Gummiverbindung 50 bis 80 Gewichtsteile Polybutadien umfaßt, welches 1,2-Polybutadien zu nicht weniger als 75 Gew.-% umfaßt und dessen Kristallisation nicht mehr als 15 % beträgt, und 20 bis 50 Gewichtsteile von zumindest einer Art Gummi, die aus Polyisoprengummi, Styrol-Butadiengummi, cis-1,4-Polybutadiengummi und halogeniertem Butylgummi ausgewählt ist.

2. Ein Reifen nach Anspruch 1, dadurch gekennzeichnet, daß der Krümmungsradius (R) der axial inneren Seite der Karkasse in jeder Seitenwand (4) in dem Bereich von 33 bis 50 mm liegt.

3. Ein Reifen nach Anspruch 1, dadurch gekennzeichnet, daß die radiale Höhe (A) des radial äußeren Randes (D1) der inneren Seitenwand (10) von der Wulstbasis (13) 0,7 bis 0,8 mal die Reifenquerschnittshöhe (H) beträgt und die radiale Höhe (B) des radial inneren Randes (D2) davon von der Wulstbasis (13) 0,1 bis 0,3 mal die Reifenquerschnittshöhe (H) beträgt.

## Revendications

1. Pneumatique de sécurité, comprenant une partie (5) de bande de roulement, une paire de parties (3) de talon, espacées axialement et ayant chacune une tringle (2), une paire de flancs (4) disposés entre les bords de la bande de roulement et les parties (3) de talon, une carcasse (6) disposée entre les parties (3) de talon et repliée autour des tringles (2) afin qu'elle soit fixée à celles-ci, des armatures de ceinture (8) comprenant au moins deux nappes (8A, 8B) de câblés placées radialement à l'extérieur de la carcasse (6) et à l'intérieur de la bande de roulement (5), un flanc interne (10) placé sur la face courbe axialement interne de la carcasse (6) dans chaque partie de flanc, caractérisé en ce que le flanc interne a une dimension qui varie progressivement à ses bords radialement externe et interne (10B, 10C) avec une configuration en forme de croissant en coupe, le rayon de courbure (R) de la face axialement interne de la carcasse de chaque flanc (4) étant compris entre 0,3 et 0,5 fois la hauteur (H) en coupe du pneumatique, l'épaisseur totale (y) de chaque partie de flanc (4) remplissant les conditions suivantes :

$$0,18 \leq x/H \leq 0,34$$
$$y < x$$
$$300 \leq (x + y)^{x/y} \leq 450$$

x étant l'épaisseur totale (en mm) mesurée le long d'une droite perpendiculaire à la carcasse à partir du bord axialement externe de la nappe radialement la plus interne de ceinture, y étant l'épaisseur totale (en mm) mesurée au point de largeur maximale en coupe auquel la largeur en coupe du pneumatique est maximale, et H étant la hauteur en coupe du pneumatique, le flanc interne (10) comprenant un caoutchouc qui contient 100 parties en poids d'une composition de caoutchouc, 40 à 60 parties en poids de noir de carbone dont le diamètre particulaire est compris entre 70 et 50 nm, et 3 à 8 parties en poids de soufre, la composition de caoutchouc contenant 50 à 80 parties en poids de polybutadiène qui contient du 1,2-polybutadiène en quantité qui n'est pas inférieure à 75 % en poids et dont la cristallisation ne dépasse pas 15 %, et 20 à 50 parties en poids d'au moins un type de caoutchouc choisi parmi le caoutchouc de polyisoprène, le caoutchouc de butadiènestyrène, le caoutchouc de cis-1,4-polybutadiène et le caoutchouc butyle halogéné.

2. Pneumatique selon la revendication 1, caractérisé en ce que le rayon de courbure (R) de la face axialement interne de la carcasse dans chaque flanc (4) est compris entre 33 et 50 mm.

3. Pneumatique selon la revendication 1, caractérisé en ce que la hauteur radiale (A) du bord radialement externe (D1) du flanc interne (10) depuis la base de talon (13) est comprise entre 0,7 et 0,8 fois la hauteur (H) en coupe du pneumatique, et la hauteur radiale (B) du bord radialement interne (D2) à partir de la base de talon (13) est comprise entre 0,1 et 0,3 fois la hauteur (H) en coupe du pneumatique.

FIG.1

EP 0 456 437 B1

# FIG.2